(19) Europäisches Patentamt / European Patent Office / Office européen des brevets

(11) **EP 4 618 451 A1**

(12) **EUROPEAN PATENT APPLICATION**
published in accordance with Art. 153(4) EPC

(43) Date of publication:
**17.09.2025 Bulletin 2025/38**

(21) Application number: **23900042.5**

(22) Date of filing: **07.12.2023**

(51) International Patent Classification (IPC):
**H04J 3/06** (2006.01)    **H04W 56/00** (2009.01)

(52) Cooperative Patent Classification (CPC):
**H04J 3/06; H04W 56/00**

(86) International application number:
**PCT/CN2023/136964**

(87) International publication number:
**WO 2024/120469 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.12.2022 CN 202211565536**

(71) Applicant: **Huawei Technologies Co., Ltd.
Shenzhen, Guangdong 518129 (CN)**

(72) Inventors:
• **XU, Yanwei**
  **Shenzhen, Guangdong 518129 (CN)**
• **ZHANG, Wei**
  **Shenzhen, Guangdong 518129 (CN)**
• **MING, Zhenyu**
  **Shenzhen, Guangdong 518129 (CN)**
• **HUANG, Jinming**
  **Shenzhen, Guangdong 518129 (CN)**
• **WU, Shangsheng**
  **Shenzhen, Guangdong 518129 (CN)**
• **CHEN, Songyan**
  **Shenzhen, Guangdong 518129 (CN)**
• **LI, Weidong**
  **Shenzhen, Guangdong 518129 (CN)**
• **WEI, Ziran**
  **Shenzhen, Guangdong 518129 (CN)**
• **ZHANG, Gong**
  **Shenzhen, Guangdong 518129 (CN)**
• **BAI, Bo**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **CLOCK SYNCHRONIZATION METHOD AND APPARATUS, DEVICE, STORAGE MEDIUM, AND COMPUTER PROGRAM**

(57)    This application discloses a clock synchronization method and apparatus, a device, a storage medium, and a computer program, and pertains to the field of communication technologies. The method includes: obtaining M first clock offsets, M second clock offsets, and a third clock offset; determining a fourth clock offset based on the M first clock offsets, the M second clock offsets, and the third clock offset; and correcting a clock of a first host based on the fourth clock offset, to implement clock synchronization between the first host and a reference host. In this application, the fourth clock offset can be precisely determined based on clock offsets of neighboring hosts relative to the first host, clock offsets of the reference host relative to the neighboring hosts, and a clock offset of the reference host relative to the first host, and the clock of the first host is corrected based on the fourth clock offset. In this way, precision of clock synchronization between the first host and the reference host can be further improved, thereby reducing a clock synchronization error.

FIG. 7

EP 4 618 451 A1

**Description**

This application claims priority to Chinese Patent Application No. 202211565536.9, filed on December 7, 2022 and entitled "CLOCK SYNCHRONIZATION METHOD AND APPARATUS, DEVICE, STORAGE MEDIUM, AND COMPUTER PROGRAM", which is incorporated herein by reference in its entirety.

**TECHNICAL FIELD**

This application relates to the field of communication technologies, and in particular, to a clock synchronization method and apparatus, a device, a storage medium, and a computer program.

**BACKGROUND**

With development of high-performance computing technologies and services, an increasing number of services need to be implemented by a plurality of hosts. In this process, clocks of the plurality of hosts need to be synchronized, to provide assurance for functions such as collaborative processing, data sharing, and network management between the hosts.

A network time protocol (network time protocol, NTP) is used in a conventional technology to perform clock synchronization. In this method, a first host sends a first probe packet to a second host, and records a sending timestamp of the first probe packet. When receiving the first probe packet, the second host records a receiving timestamp of the first probe packet, and then sends a second probe packet to the first host. The second probe packet carries the receiving timestamp of the first probe packet and a sending timestamp of the second probe packet. When receiving the second probe packet, the first host records a receiving timestamp of the second probe packet. Then, the first host determines a clock offset of the first host relative to the second host based on the foregoing four timestamps, and completes clock synchronization between the first host and the second host based on the clock offset.

However, in the foregoing method, the clock offset can be obtained only when it is assumed that one-way delays in a round trip between two hosts are the same. However, during actual application, the one-way delays in the round trip are asymmetric due to inconsistent round-trip paths, different lengths of physical links of the round-trip paths, or the like. In other words, a piece of time required for transmitting a data packet from the first host to the second host is different from a piece of time required for transmitting a data packet from the second host to the first host. When the one-way delays in the round trip are asymmetric, precision of clock synchronization performed according to the foregoing method is low, resulting in a large error.

**SUMMARY**

This application provides a clock synchronization method and apparatus, a device, a storage medium, and a computer program, to resolve a problem of low precision of clock synchronization in a conventional technology. The technical solutions are as follows.

According to a first aspect, a clock synchronization method is provided, applied to a first host. The first host has M neighboring hosts, and M is an integer greater than or equal to 1. In the method, M first clock offsets, M second clock offsets, and a third clock offset are obtained. The first clock offset is a clock offset of one of the M neighboring hosts relative to the first host, the second clock offset is a clock offset of a reference host relative to one of the M neighboring hosts, and the third clock offset is a clock offset of the reference host relative to the first host. A fourth clock offset is determined based on the M first clock offsets, the M second clock offsets, and the third clock offset. A clock of the first host is corrected based on the fourth clock offset, to implement clock synchronization between the first host and the reference host.

In an ideal situation, the clock offset of the reference host relative to the first host is equal to a sum of the clock offset of the reference host relative to the neighboring host and the clock offset of the neighboring host relative to the first host. Therefore, the fourth clock offset can be precisely determined based on clock offsets of the neighboring hosts relative to the first host, clock offsets of the reference host relative to the neighboring hosts, and the clock offset of the reference host relative to the first host, and the clock of the first host is corrected based on the fourth clock offset. In this way, precision of clock synchronization between the first host and the reference host can be further improved, thereby reducing a clock synchronization error.

The first host can send a probe packet to the M neighboring hosts and the reference host according to a related method, to determine the M first clock offsets and the third clock offset.

For any neighboring host of the M neighboring hosts, the neighboring host can send a clock offset of the reference host relative to the neighboring host to the first host, and the first host receives the clock offset of the reference host relative to the neighboring host, to obtain one second clock offset. The first host receives, in a same manner, a clock offset sent by each of the M neighboring hosts, to obtain the M second clock offsets.

Optionally, for any neighboring host of the M neighboring hosts, before the neighboring host sends the clock offset of the reference host relative to the neighboring host to the first host, the neighboring host can also send a probe packet to the reference host according to a related method, to determine the clock offset of the reference host relative to the neighboring host. In a same manner, each of the M neighboring hosts can determine a clock offset of the reference host relative to each neighboring host.

In an ideal state, there is no clock synchronization error between the first host and the reference host, and there is no clock synchronization error between the neighboring host and the reference host. In this case, the clock offset of the reference host relative to the first host is equal to a sum of the clock offset of the reference host relative to the neighboring host and the clock offset of the neighboring host relative to the first host. That is, the third clock offset is equal to a sum of the second clock offset and the first clock offset. For ease of description, the sum of the second clock offset and the first clock offset is collectively referred to as a calculated clock offset in the following.

However, asymmetry of OWDs in a round trip between two hosts causes an error in clock synchronization. Therefore, when the first host has M neighboring hosts, M calculated clock offsets are not necessarily equal, and are not necessarily equal to the third clock offset. To further reduce a clock synchronization error and improve precision of clock synchronization, the fourth clock offset may be determined based on the M first clock offsets, the M second clock offsets, and the third clock offset according to the following formula (1):

$$\tau_a = \frac{(\tau_0 + offset_{10}) + \sum_{j=1}^{M}(\tau_j + offset_{1j})}{M+1} \qquad (1)$$

In the foregoing formula (1), $\tau_a$ represents the fourth clock offset. $\tau_0$ represents a clock offset of the reference host relative to itself, and the clock offset is 0. That is, the reference host does not have a clock offset with itself. $offset_{10}$ represents the third clock offset. $\tau_j$ represents a $j^{th}$ second clock offset of the M second clock offsets, that is, a clock offset of the reference host relative to a $j^{th}$ neighboring host of the M neighboring hosts. $offset_{1j}$ represents a $j^{th}$ first clock offset of the M first clock offsets, that is, a clock offset of the $j^{th}$ neighboring host of the M neighboring hosts relative to the first host.

In other words, an average value of the M calculated clock offsets and the third clock offset may be determined as the fourth clock offset, and the clock of the first host is corrected based on the fourth clock offset in a subsequent step, thereby reducing a clock synchronization error caused by asymmetry of OWDs in a round trip, and implementing high-precision clock synchronization.

Optionally, before the fourth clock offset is determined based on the M first clock offsets, the M second clock offsets, and the third clock offset, M pieces of first round-trip time and a piece of third round-trip time may be further obtained. The piece of first round-trip time is a piece of round-trip time between the first host and one of the M neighboring hosts, and the piece of third round-trip time is a piece of round-trip time between the reference host and the first host. In this way, the fourth clock offset is determined based on the M first clock offsets, the M second clock offsets, the third clock offset, the M pieces of first round-trip time, and the piece of third round-trip time.

An implementation in which the fourth clock offset is determined based on the M first clock offsets, the M second clock offsets, the third clock offset, the M pieces of first round-trip time, and the piece of third round-trip time includes: determining M+1 initial clock offsets based on the M first clock offsets, the M second clock offsets, and the third clock offset; determining, based on the M pieces of first round-trip time and the piece of third round-trip time, weights respectively corresponding to the M pieces of first round-trip time and a weight corresponding to the piece of third round-trip time, to obtain M+1 weights; and determining the fourth clock offset based on the M+1 initial clock offsets and the M+1 weights.

M initial clock offsets can be determined based on the M first clock offsets and the M second clock offsets, and the third clock offset is also used as an initial clock offset, to obtain the M+1 initial clock offsets.

The M first clock offsets correspond to the M neighboring hosts, and the M second clock offsets also correspond to the M neighboring hosts. Therefore, the M first clock offsets correspond to the M second clock offsets one by one. For any first clock offset of the M first clock offsets, the first clock offset and a corresponding second clock offset are added to obtain an initial clock offset. Each of the M first clock offsets and each of the M second clock offsets are processed in a same manner, to obtain the M initial clock offsets.

Optionally, reciprocals of the M pieces of first round-trip time are used as weights respectively corresponding to the M pieces of first round-trip time, and a reciprocal of the piece of third round-trip time is used as a weight corresponding to the piece of third round-trip time, to obtain the M+1 weights.

Optionally, multiples of reciprocals of the M pieces of first round-trip time may be used as weights respectively corresponding to the M pieces of first round-trip time, and a multiple of a reciprocal of the piece of third round-trip time may be used as a weight corresponding to the piece of third round-trip time, to obtain the M+1 weights. Certainly, the M+1 weights may alternatively be determined in another manner, so that the weights are inversely proportional to the pieces of round-trip time.

Optionally, an implementation of determining the fourth clock offset based on the M+1 initial clock offsets and the M+1 weights includes: multiplying the M+1 initial clock offsets and values of corresponding weights to obtain M+1 weight clock offsets, and dividing a sum of the M+1 weight clock offsets by a sum of the M+1 weights to obtain the fourth clock offset.

The M initial clock offsets of the M+1 initial clock offsets correspond to the M neighboring hosts, one remaining initial clock offset corresponds to the reference host, M weights of the M+1 weights correspond to the M neighboring hosts, and one remaining weight corresponds to the reference host. Therefore, based on this, the M+1 initial clock offsets are in one-to-one correspondence with the M+1 weights.

For ease of understanding, the foregoing process of determining the fourth clock offset based on the M+1 initial clock offsets and the M+1 weights may be represented by using the following formula (2):

$$\tau_a = \frac{\sum\limits_{d=1}^{M+1} (X_d A_d)}{\sum\limits_{d=1}^{M+1} A_d} \qquad (2)$$

In the foregoing formula (2), $\tau_a$ represents the fourth clock offset, $X_d$ represents a $d^{th}$ initial clock offset in the M+1 initial clock offsets, and $A_d$ represents a weight corresponding to the $d^{th}$ initial clock offset in the M+1 initial clock offsets.

Asymmetry of OWDs in a round trip between two hosts causes an error in clock synchronization, and a longer piece of round-trip time indicates a longer transmission path between the two hosts. In addition, a greater probability that the OWDs in the round trip between the two hosts are asymmetric indicates a greater difference between the OWDs in the round trip, leading to a larger clock synchronization error. In this case, a confidence of the calculated initial clock offset is lower. Therefore, the M+1 initial clock offsets may be multiplied by corresponding weights, so that an initial clock offset with a low confidence corresponds to a low weight, thereby ensuring that the finally determined fourth clock offset is more precise and effectively reducing a clock synchronization error.

Optionally, the first host may correct the clock of the first host to a sum of a current moment of the first host and the fourth clock offset, thereby implementing clock synchronization between the first host and the reference host. Certainly, the first host may also store the fourth clock offset, to implement clock synchronization between the first host and the reference host. In other words, the first host may adjust its own clock to a clock of the reference host, so that the clock of the first host is synchronized with the clock of the reference host. Alternatively, the first host may store the fourth clock offset, and does not adjust its own clock. During subsequent communication, a timestamp is set to a sum of a current moment of the first host and the fourth clock offset.

Optionally, the first host may alternatively obtain the fourth clock offset through iteration in a plurality of time slices, thereby ensuring that an error of the finally obtained fourth clock offset is minimized and implementing higher-precision clock synchronization.

When the first host obtains the fourth clock offset through iteration in a plurality of time slices, the M first clock offsets, the M second clock offsets, and the third clock offset in a $1^{st}$ time slice are all obtained by the first host and the M neighboring hosts through probing. From a $2^{nd}$ time slice, the M first clock offsets and the third clock offset are still obtained by the first host through probing, the M second clock offsets are obtained by performing iteration on clock offsets of the reference host relative to the M neighboring hosts in a previous time slice. The fourth clock offset is a clock offset that is of the reference host relative to the first host and that is obtained by performing iteration in a current time slice. In this case, if the fourth clock offset meets a convergence condition, the clock of the first host is corrected based on the fourth clock offset. If the fourth clock offset does not meet the convergence condition, a quantity of iterations is increased by 1, and the fourth clock offset is sent to the M neighboring hosts, so that the M neighboring hosts perform iteration on the clock offsets of the reference host relative to the M neighboring hosts, and obtain the M first clock offsets, the M second clock offsets, and the third clock offset in a next time slice.

Optionally, for any neighboring host of the M neighboring hosts, the neighboring host can alternatively determine a clock offset of the reference host relative to the neighboring host with reference to the foregoing manner of determining the fourth clock offset by the first host, to obtain a second clock offset, and send the second clock offset to the first host.

Optionally, the convergence condition includes: a quantity of iterations of the fourth clock offset is greater than an iteration quantity threshold. Optionally, the convergence condition includes: a difference between the fourth clock offset and a fifth clock offset is less than an offset threshold; and the fifth clock offset is a clock offset that is of the reference host relative to the first host and that is obtained by performing iteration in a previous time slice.

During actual application, the first host may be a device such as a switch. When the first host is a switch, the first host may include one main control board and one interface board, the main control board is connected to the interface board, and the fourth clock offset is a clock offset of the reference host relative to the main control board. In this case, after the clock of the first host is corrected based on the fourth clock offset, a clock of the interface board may be further corrected based on the clock offset of the reference host relative to the main control board.

Based on the clock offset of the reference host relative to the main control board, the clock of the interface board is corrected in a plurality of manners. The following describes two of the manners.

In a first implementation, the main control board determines a corrected clock of the interface board based on the clock offset of the reference host relative to the main control board, and the main control board sends the corrected clock of the interface board to the interface board. The interface board receives the corrected clock sent by the main control board, and corrects its own clock based on the received corrected clock, to complete clock synchronization with the main control board.

In a second implementation, the main control board determines a clock offset of the main control board relative to the interface board based on the clock offset of the reference host relative to the main control board and the clock of the interface board, and the main control board sends, to the interface board, the clock offset of the main control board relative to the interface board. The interface board receives the clock offset sent by the main control board, and corrects its own clock based on the received clock offset, to complete clock synchronization with the main control board.

Optionally, the first host may further include one main control board and X secondary control boards, the main control board is connected to the X secondary control boards, the fourth clock offset is a clock offset of the reference host relative to the main control board, and X is an integer greater than or equal to 1. In this case, after the clock of the first host is corrected based on the fourth clock offset, clocks of the X secondary control boards may be further corrected based on the clock offset of the reference host relative to the main control board, to implement clock synchronization between the X secondary control boards and the main control board.

When the main control board and the X secondary control boards have completed clock synchronization, clock offsets of the main control board relative to the X secondary control boards may be respectively determined. The clocks of the X secondary control boards are corrected based on the clock offsets of the main control board relative to the X secondary control boards, to implement clock synchronization between the X secondary control boards and the main control board.

Optionally, for any secondary control board of the X secondary control boards, the main control board may directly determine the clock offset of the reference host relative to the main control board as a clock offset of the main control board relative to the secondary control board. The main control board sends, to the secondary control board, the clock offset of the main control board relative to the secondary control board. The secondary control board receives the clock offset sent by the main control board, and corrects its own clock based on the received clock offset, to complete clock synchronization with the main control board. Each of the X secondary control boards is processed in the foregoing manner, to finally implement clock synchronization between the X secondary control boards and the main control board.

When the main control board and the X secondary control boards have not performed clock synchronization, a first secondary control board obtains X-1 sixth clock offsets, X-1 seventh clock offsets, and an eighth clock offset. The sixth clock offset is a clock offset of one of X-1 neighboring secondary control boards relative to the first secondary control board. The seventh clock offset is a clock offset of the main control board relative to one of the X-1 neighboring secondary control boards. The eighth clock offset is a clock offset of the main control board relative to the first secondary control board. A ninth clock offset is determined based on the X-1 sixth clock offsets, the X-1 seventh clock offsets, and the eighth clock offset. A clock of the first secondary control board is corrected based on the ninth clock offset, to implement clock synchronization between the first secondary control board and the main control board. The first secondary control board is one of the X secondary control boards, and the first secondary control board has X-1 neighboring secondary control boards. The neighboring secondary control board is a secondary control board other than the first secondary control board in the X secondary control boards. Each of the X secondary control boards is processed in the foregoing manner, to finally implement clock synchronization between the X secondary control boards and the main control board.

Optionally, when the first host includes the main control board and the X secondary control boards, the first host may further include Y interface boards. Each of the X secondary control boards is connected to at least one of the Y interface boards, and Y is an integer greater than or equal to 1. After the clocks of the X secondary control boards are corrected based on the clock offsets of the main control board relative to the X secondary control boards, clocks of the Y interface boards may be further corrected based on the clock offsets of the main control board relative to the X secondary control boards.

In other words, when the first host includes the main control board and the interface boards, the fourth clock offset is a clock offset of the reference host relative to the main control board, and the first host may refresh a clock of the main control board to those of the interface boards based on the clock offset of the reference host relative to the main control board, to ensure implementation of high-precision clock synchronization between clocks of the interface boards and a clock of the reference host. When the first host includes the main control board, the secondary control boards, and the interface boards, the fourth clock offset is also a clock offset of the reference host relative to the main control board. In this case, clock synchronization may be performed between the main control board and the secondary control boards based on the clock offset of the reference host relative to the main control board, to refresh clocks of the secondary control boards to those of the interface boards, to ensure implementation of high-precision clock synchronization between clocks of the interface boards and a clock of the reference host. In this way, in a subsequent process of calculating a one-way delay by sending a probe packet, a timestamp may be generated based on a time at which the probe packet is sent from the interface board, to avoid a case in which a measured one-way delay is greater than an actual one-way delay because the probe packet queues in a network adapter, thereby effectively ensuring accurate measurement of the one-way delay.

According to a second aspect, a clock synchronization apparatus is provided, and the clock synchronization apparatus has a function of implementing behavior of the clock synchronization method in the first aspect. The clock synchronization apparatus includes at least one module, and the at least one module is configured to implement the clock synchronization method provided in the first aspect.

According to a third aspect, a host is provided. The host includes a processor and a memory, and the memory is configured to store a computer program for performing the clock synchronization method provided in the first aspect. The processor is configured to execute the computer program stored in the memory, to implement the clock synchronization method according to the first aspect.

Optionally, the host may further include a communication bus. The communication bus is configured to establish a connection between the processor and the memory.

According to a fourth aspect, a computer-readable storage medium is provided. The storage medium stores instructions, and when the instructions are run on a computer, the computer is enabled to perform steps of the clock synchronization method according to the first aspect.

According to a fifth aspect, a computer program product including instructions is provided. When the instructions are run on a computer, the computer is enabled to perform steps of the clock synchronization method according to the first aspect. In other words, a computer program is provided. When the computer program is run on a computer, the computer is enabled to perform steps of the clock synchronization method according to the first aspect.

Technical effects achieved in the second aspect, the third aspect, the fourth aspect, and the fifth aspect are similar to those achieved by corresponding technical means in the first aspect. Details are not described again herein.

## BRIEF DESCRIPTION OF DRAWINGS

FIG. 1 is a diagram of a clock synchronization method according to an embodiment of this application;
FIG. 2 is a diagram of a transmission path according to an embodiment of this application;
FIG. 3 is a diagram of an optical fiber according to an embodiment of this application;
FIG. 4 is a diagram of a clock synchronization error according to an embodiment of this application;
FIG. 5 is a diagram of an implementation environment according to an embodiment of this application;
FIG. 6 is a diagram of a structure of a host according to an embodiment of this application;
FIG. 7 is a flowchart of a clock synchronization method according to an embodiment of this application;
FIG. 8 is a diagram of calculating a clock offset according to an embodiment of this application;
FIG. 9 is a diagram of a clock refresh for an interface board according to an embodiment of this application;
FIG. 10 is diagram of another clock refresh for an interface board according to an embodiment of this application;
FIG. 11 is a flowchart of another clock synchronization method according to an embodiment of this application; and
FIG. 12 is a diagram of a structure of a clock synchronization apparatus according to an embodiment of this application.

## DESCRIPTION OF EMBODIMENTS

To make objectives, technical solutions, and advantages of embodiments of this application clearer, the following further describes implementations of this application in detail with reference to the accompanying drawings.

For ease of understanding, before the clock synchronization method provided in embodiments of this application is described in detail, nouns, an application scenario, and an implementation environment in embodiments of this application are first described.

First, terms in embodiments of this application are explained.

**One-way delay (one-way delay, OWD):** In network communication, the one-way delay is a piece of time required for transmitting a data packet from a first host to a second host, or a piece of time required for transmitting a data packet from the second host to the first host.

**Round-trip time (round-trip time, RTT):** In network communication, the round-trip time is a sum of a piece of time required for transmitting a data packet from a first host to a second host and a piece of time required for transmitting a data packet from the second host to the first host. When one-way delays are symmetric, that is, when the piece of time required for transmitting the data packet from the first host to the second host is equal to the piece of time required for transmitting the data packet from the second host to the first host, the RTT is twice the one-way delay. When one-way delays are asymmetric, that is, when the piece of time required for transmitting the data packet from the first host to the second host is different from the piece of time required for transmitting the data packet from the second host to the first host, the RTT is not equal to twice the one-way delay.

**Clock offset (offset):** The clock offset is a relative difference between two clocks, that is, a difference between time displayed on the two clocks at a same moment. For example, at a same moment, if time displayed on a first clock is 12:00, and time displayed on a second clock is 12:01, a clock offset of the first clock relative to the second clock is -1 second, and a clock offset of the second clock relative to the first clock is 1 second.

**Cluster network:** A cluster runs same software on a group of computers and is virtualized into a host system to provide services for clients and applications. The cluster network is a communication system used to connect a plurality of computer services and storage resources that are mutually independent and that are interconnected through a high-speed network.

Next, an application scenario in embodiments of this application is described.

With development of high-performance computing technologies and services, an increasing number of services need to be implemented by a cluster network including a plurality of hosts. A host generally means a machine device that has a computer service and a storage resource. For example, the host may be a personal computer, a router, a switch, or the like. High-speed communication and data transmission can be performed between hosts according to a transmission control protocol (transmission control protocol, TCP)/user datagram protocol (user datagram protocol, UDP). In a cluster network, accurate one-way delay measurement can effectively reflect a network real-time condition and is an important measurement indicator of a service level agreement (service level agreement, SLA).

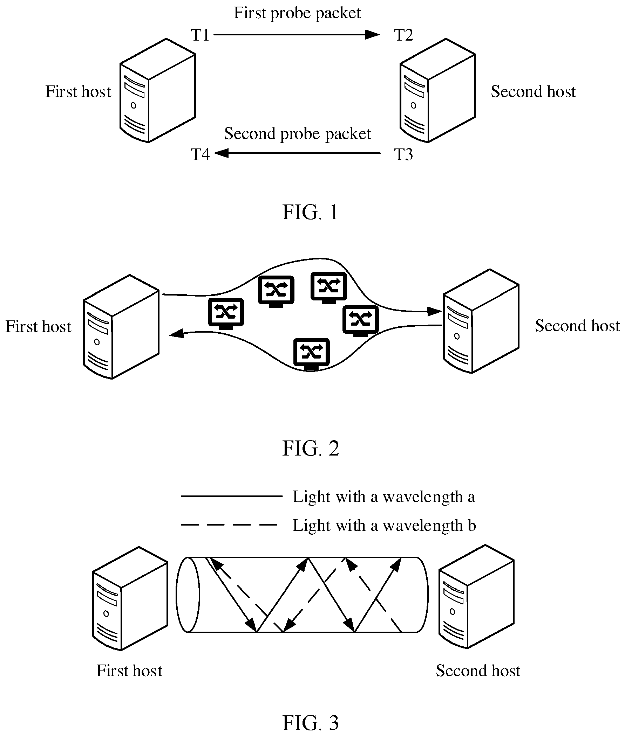

To implement one-way delay measurement, a current mainstream method is to first synchronize all clocks in a cluster network according to a clock synchronization protocol such as an NTP or a precision time protocol (precision time protocol, PTP), and then calculate a one-way delay by sending a probe packet. For example, clock synchronization is performed by using the NTP. Refer to FIG. 1. A first host sends a first probe packet to a second host, and records a sending timestamp T1 of the first probe packet. When receiving the first probe packet, the second host records a receiving timestamp T2 of the first probe packet, and then sends a second probe packet to the first host. The second probe packet carries the receiving timestamp T2 of the first probe packet and a sending timestamp T3 of the second probe packet. When receiving the second probe packet, the first host records a receiving timestamp T4 of the second probe packet. Then, the first host can determine, based on the foregoing four timestamps, a piece of RTT from the first host to the second host and a clock offset A of the second host relative to the first host. $RTT=(T4-T1)-(T3-T2)$, $T2=T1+A+(RTT\div2)$, and $T4=T3-A+(RTT\div2)$. $A=((T2-T1)+(T3-T4))\div2$ can be resolved according to the three equations. After A is added to a clock of the first host, clock synchronization between the first host and the second host can be implemented.

In an existing clock synchronization protocol, clock synchronization is performed based on the four timestamps, and a clock offset can be obtained only when it is assumed that OWDs of a round trip between two hosts are the same. A main difference between these protocols lies in that different clock synchronization protocols generate the four timestamps in different manners or process the four timestamps in different manners. For example, in the NTP, a timestamp is generated based on a clock of a central processing unit (central processing unit, CPU). However, because a probe packet may queue in a network adapter, a time at which the probe packet is sent is later than a time at which the timestamp is generated. Consequently, a measured piece of RTT is greater than an actual piece of RTT, and accuracy of a clock offset is affected.

Even if a timestamp is generated based on the time at which the probe packet is sent from the network adapter, accuracy of the clock offset cannot be ensured. This is because OWDs in a round trip between the two hosts are different. In other words, the OWDs in the round trip between the two hosts are asymmetric, and such asymmetry is a difference between the OWDs in the round trip. There are a plurality of reasons for asymmetry of the OWDs in the round trip between the two hosts. For example, traffic optimization causes inconsistent round-trip transmission paths of data packets. Refer to FIG. 2. A path for transmitting a data packet from a first host to a second host includes four switches, while a path for transmitting a data packet from the second host to the first host includes only three switches. Therefore, it can be learned that the round-trip transmission paths of the data packets are inconsistent. For another example, in a bidirectional optical fiber, use of light with different wavelengths for transmission in two directions causes a difference in lengths of the round-trip transmission paths. Refer to FIG. 3. In the bidirectional optical fiber, light with a wavelength a is used in a path for transmitting a data packet from a first host to a second host, and light with a wavelength b is used in a path for transmitting a data packet from the second host to the first host. Because dispersion degrees of light with different wavelengths are different, lengths of the round-trip transmission paths are different. For another example, lengths of physical links of the round-trip transmission paths are different, or loads in the round-trip transmission paths of the data packets are different. These reasons cause asymmetry of the OWDs in the round trip between the two hosts.

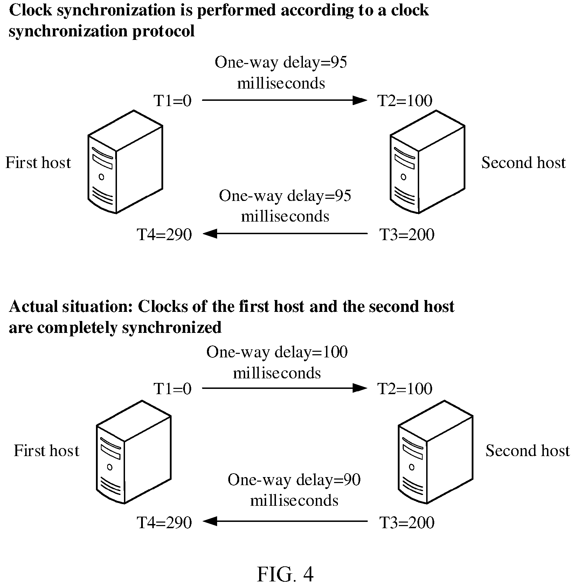

However, the foregoing reasons for asymmetry of the OWDs in the round trip between the two hosts are difficult to eliminate, and theoretically, the clock synchronization error in the foregoing protocol is at least half of the asymmetry. For example, refer to FIG. 4. A piece of RTT that is from a first host to a second host and that is obtained based on the clock synchronization protocol is 190 milliseconds, a piece of time required for transmitting a data packet from the first host to the second host is equal to a piece of time required for transmitting a data packet from the second host to the first host, and a clock offset A of the second host relative to the first host is 5 milliseconds. However, actually, there is no clock offset between the first host and the second host. In addition, a piece of time required for transmitting a data packet from the first host to the second host is 100 milliseconds, a piece of time required for transmitting a data packet from the second host to the first host is 90 milliseconds, and asymmetry of OWDs in a round trip between the first host and the second host is 10 milliseconds. In other words, there is a clock synchronization error of 5 milliseconds when clock synchronization is performed based on the clock synchronization protocol, and the clock synchronization error is half of the asymmetry. It can be learned that, if the OWDs in the round trip between the two hosts are the same by default, precision of clock synchronization is low, and a large error is generated. Based on this, an embodiment of this application provides a clock synchronization method, to correct a clock offset between two hosts, further improve precision of clock synchronization between the two hosts, reduce a clock synchronization error caused by asymmetry of OWDs in a round trip, and finally complete high-precision clock synchronization, thereby laying a foundation for accurate measurement of a subsequent one-way delay.

Next, an implementation environment in embodiments of this application is described.

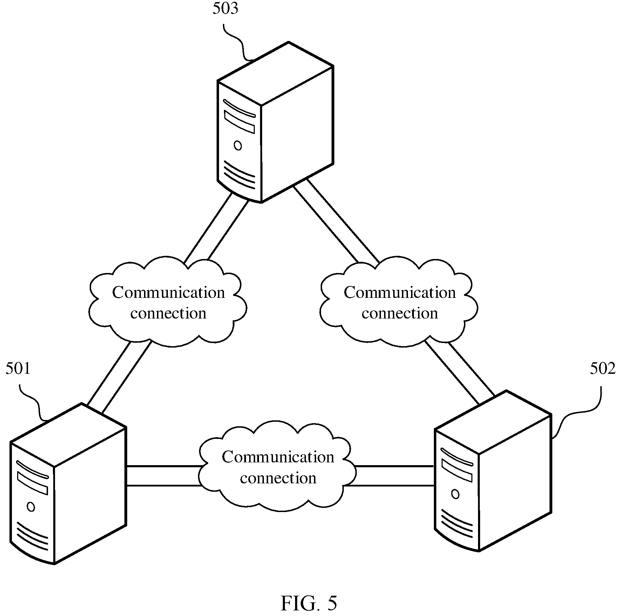

FIG. 5 is a diagram of an implementation environment according to an example embodiment. The implementation environment includes a first host 501, M neighboring hosts 502 (in FIG. 5, one neighboring host is used as an example to represent the M neighboring hosts), and a reference host 503. The first host 501, the M neighboring hosts 502, and the reference host 503 are located in a same cluster network. That is, a communication connection may be performed between the first host 501, the M neighboring hosts 502, and the reference host 503. The communication connection may be wired or wireless. This is not limited in this embodiment of this application.

The reference host 503 may be any host that is located in the same cluster network as the first host 501, and a clock of the reference host 503 may be used as a standard clock, so that another host in the cluster network performs clock synchronization with the reference host 503. In this case, any host that needs to perform clock synchronization with the reference host 503 is referred to as a first host 501. The M neighboring hosts may be hosts, other than the reference host 503, that have a direct physical connection relationship with the first host 501, or may be hosts, other than the reference host, that are in the same cluster network and can communicate with the first host 501. In other words, the first host may be any host in the cluster network other than the reference host. The neighboring hosts may be other hosts other than the reference host and the first host in the cluster network.

The first host 501 can obtain M first clock offsets, M second clock offsets, and a third clock offset. The first clock offset is a clock offset of one of the M neighboring hosts 502 relative to the first host 501, the second clock offset is a clock offset of the reference host 503 relative to one of the M neighboring hosts 502, and the third clock offset is a clock offset of the reference host 503 relative to the first host 501. The first host 501 determines a fourth clock offset based on the M first clock offsets, the M second clock offsets, and the third clock offset, and then corrects a clock of the first host 501 based on the fourth clock offset, to implement clock synchronization between the first host 501 and the reference host 503.

Optionally, the first host 501, the M neighboring hosts 502, and the reference host 503 may be a personal computer, a router, a switch, or the like. This is not limited in this embodiment of this application.

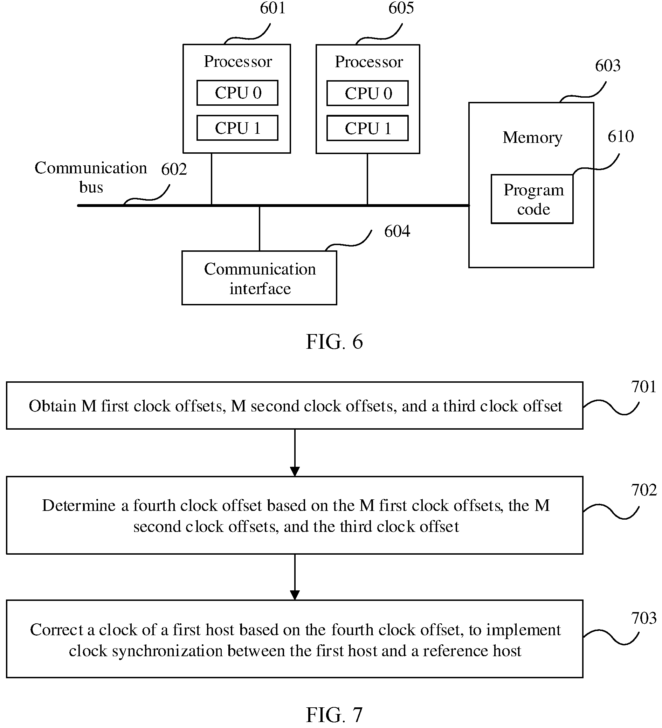

FIG. 6 is a diagram of a structure of a host according to an embodiment of this application. The host may be the first host 501, the neighboring host 502, the reference host 503, or the like shown in FIG. 5. The host includes at least one processor 601, a communication bus 602, a memory 603, and at least one communication interface 604.

The processor 601 may be a general-purpose central processing unit (central processing unit, CPU), a network processor (network processor, NP), or a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The communication bus 602 is configured to transmit information between the foregoing components. The communication bus 602 may be classified into an address bus, a data bus, a control bus, and the like. For ease of representation, only one thick line is used to represent the bus in the figure, but this does not mean that there is only one bus or only one type of bus.

The memory 603 may be a read-only memory (read-only memory, ROM), a random access memory (random access memory, RAM), an electrically erasable programmable read-only memory (electrically erasable programmable read-only memory, EEPROM), an optical disc (which includes a compact disc read-only memory (compact disc read-only memory, CD-ROM), a compact disc, a laser disc, a digital versatile disc, a Blu-ray disc, and the like), a magnetic disk storage medium, another magnetic storage device, or any other medium that can be configured to carry or store expected program code in a form of an instruction or a data structure and that can be accessed by a computer, but is not limited thereto. The memory 603 may exist independently, and is connected to the processor 601 through the communication bus 602. Alternatively, the memory 603 may be integrated with the processor 601.

The communication interface 604 uses any apparatus such as a transceiver, to communicate with another device or a communication network. The communication interface 604 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

During specific implementation, in an embodiment, the processor 601 may include one or more CPUs, for example, a CPU 0 and a CPU 1 in FIG. 6.

During specific implementation, in an embodiment, the host may include a plurality of processors such as the processor 601 and a processor 605 shown in FIG. 6. Each of the processors may be a single-core processor, or may be a multi-core processor. The processor herein may be one or more devices, circuits, and/or processing cores configured to process data (for example, computer program instructions).

During specific implementation, in an embodiment, the host may further include an output device 606 and an input device 607. The output device 606 communicates with the processor 601, and may display information in a plurality of manners. For example, the output device 606 may be a liquid crystal display (liquid crystal display, LCD), a light-emitting diode (light-emitting diode, LED) display device, a cathode ray tube (cathode ray tube, CRT) display device, a projector (projector), or the like. The input device 607 communicates with the processor 601, and may receive a user input in a plurality of manners. For example, the input device 607 may be a mouse, a keyboard, a touchscreen device, or a sensing device.

In some embodiments, the memory 603 is configured to store program code 610 for executing the solutions of this application, and the processor 601 may execute the program code 610 stored in the memory 603. The program code 610 may include one or more software modules. The host may implement, by using the processor 601 and the program code 610 in the memory 603, the clock synchronization method provided in the following embodiment in FIG. 7.

FIG. 7 is a flowchart of a clock synchronization method according to an embodiment of this application. The method is applied to a first host. The first host has M neighboring hosts, and M is an integer greater than or equal to 1. Refer to FIG. 7. The method includes the following steps.

**Step 701:** Obtain M first clock offsets, M second clock offsets, and a third clock offset, where the first clock offset is a clock offset of one of the M neighboring hosts relative to the first host, the second clock offset is a clock offset of a reference host relative to one of the M neighboring hosts, and the third clock offset is a clock offset of the reference host relative to the first host.

The first host can send a probe packet to the M neighboring hosts and the reference host according to a related method, to determine the M first clock offsets and the third clock offset. For example, four timestamps are determined according to an NTP, and then a corresponding clock offset is determined based on the four timestamps.

For any neighboring host of the M neighboring hosts, the neighboring host can send a clock offset of the reference host relative to the neighboring host to the first host, and the first host receives the clock offset of the reference host relative to the neighboring host, to obtain one second clock offset. The first host receives, in a same manner, a clock offset sent by each of the M neighboring hosts, to obtain the M second clock offsets.

In other words, the M first clock offsets and the third clock offset are determined by the first host through probing, and the M second clock offsets are sent by the M neighboring hosts to the first host. Certainly, the M first clock offsets, the M second clock offsets, and the third clock offset may alternatively be obtained by the first host in another manner. This is not limited in this embodiment of this application.

Optionally, for any neighboring host of the M neighboring hosts, before the neighboring host sends the clock offset of the reference host relative to the neighboring host to the first host, the neighboring host can also send a probe packet to the reference host according to a related method, to determine the clock offset of the reference host relative to the neighboring host. In a same manner, each of the M neighboring hosts can determine a clock offset of the reference host relative to each neighboring host.

In other words, the first host can send a probe packet to the reference host and the M neighboring hosts, to obtain the M first clock offsets and the third clock offset. In addition, the M neighboring hosts can also send a probe packet to the reference host, so that the M neighboring hosts can determine clock offsets of the reference host relative to the M neighboring hosts.

Before the first host performs clock synchronization, the first host may further perform time slice synchronization with the M neighboring hosts, to ensure that the M first clock offsets, the M second clock offsets, and the third clock offset are obtained by the first host through probing within a same time slice. This avoids a clock synchronization error caused by unsynchronized time slice probing, thereby further improving precision of clock synchronization. Therefore, before the first host and the neighboring hosts perform probing, the first host and the M neighboring hosts may determine, based on control signaling of a time slice, a start moment and an end moment of the time slice, to complete time slice synchronization.

Optionally, the control signaling of the time slice includes a first time interval and a time length of the time slice. The first host and the M neighboring hosts may use a moment obtained by delaying a moment of receiving the control signaling of the time slice by the first time interval as the start moment of the time slice, and determine the end moment of the time slice based on the time length of the time slice. When the first host needs to perform clock synchronization in a plurality of time slices, the first host may synchronize the plurality of time slices based on control signaling of one time slice, or may respectively synchronize the plurality of time slices based on control instructions of the plurality of time slices. When the plurality of time slices are synchronized based on a control instruction of one time slice, the first host and the M neighboring hosts may use a moment obtained by delaying a moment of receiving the control signaling of the time slice by a first time interval as a start moment of a first time slice, and determine a start moment and an end moment of each time slice based on a time length of the time slice.

Optionally, the reference host may send control signaling of a time slice to the first host and the M neighboring hosts. Certainly, the reference host may alternatively send control signaling of a time slice only to the first host. In this case, after receiving the control signaling of the time slice, the first host can send the control signaling of the time slice to the M neighboring hosts. In other words, when the reference host sends the control signaling of the time slice only to the first host, the first host can forward the control signaling of the time slice to the M neighboring hosts.

When the first host forwards the control signaling of the time slice, the first host may directly send the control signaling of the time slice to the M neighboring hosts after receiving the control signaling of the time slice. Certainly, the first host may also determine an estimated moment of forwarding the control signaling of the time slice; determine a correction time interval based on the estimated moment, a moment of receiving the control signaling of the time slice by the first host, and a first time interval; and update the first time interval in the control signaling of the time slice to the correction time interval, to obtain modified control signaling of the time slice. The first host sends the modified control signaling of the time slice to the M neighboring hosts at the estimated moment.

In other words, the first host may forward the control signaling of the time slice immediately after receiving the control signaling of the time slice, or may determine, according to a load condition of the first host, the estimated moment of forwarding the control signaling of the time slice. In this case, the first host may update the first time interval in the control signaling of the time slice based on the estimated moment, so that the M neighboring hosts can also synchronize with a time slice of the first host after receiving the control signaling that is of the time slice and that is sent by the first host at the estimated moment.

Optionally, the first host may use a difference between a moment of receiving the control signaling of the time slice by the first host and the estimated moment of forwarding the control signaling of the time slice by the first host as delay duration. A value obtained by subtracting the delay duration from the first time interval is used as the correction time interval.

It should be noted that there may be a time interval between two adjacent time slices, or there may be no time interval between two adjacent time slices. This is not limited in this embodiment of this application. When there is a time interval between two adjacent time slices, the control signaling of the time slice further includes a third time interval. The third time interval indicates the time interval between the two adjacent time slices.

The first time interval is set in advance. For example, the first time interval may be set to 30 milliseconds. In this case, the first host uses a moment obtained by delaying a moment of receiving the control signaling of the time slice by 30 milliseconds as a start moment of a $1^{st}$ time slice. In addition, in different cases, adjustment may be further performed according to different requirements. The time length of the time slice is also set in advance. For example, the time length of the time slice may be set to 1 second. In addition, in different cases, adjustment may be further performed according to different requirements. Alternatively, the third time interval may be set in advance. For example, when the third time interval is set to 0, it indicates that there is no time interval between the two adjacent time slices. In addition, in different cases, adjustment may be further performed according to different requirements.

**Step 702:** Determine a fourth clock offset based on the M first clock offsets, the M second clock offsets, and the third clock offset.

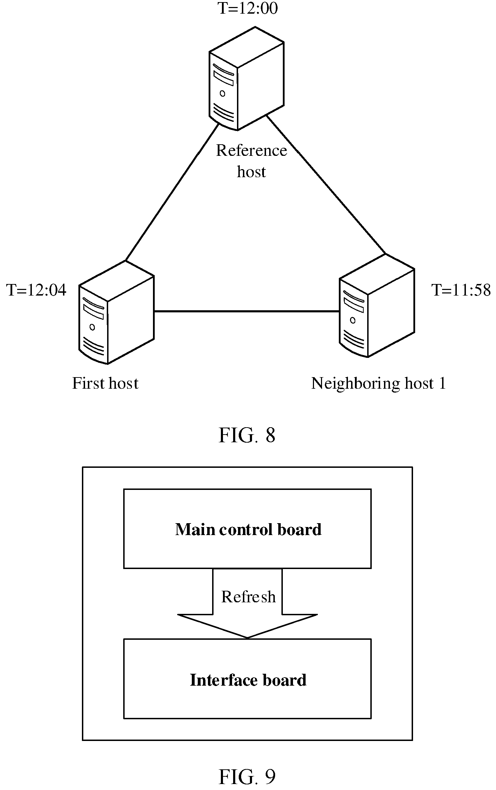

In an ideal state, there is no clock synchronization error between the first host and the reference host, and there is no clock synchronization error between the neighboring host and the reference host. In this case, the clock offset of the reference host relative to the first host is equal to a sum of the clock offset of the reference host relative to the neighboring host and the clock offset of the neighboring host relative to the first host. That is, the third clock offset is equal to a sum of the second clock offset and the first clock offset. For ease of description, the sum of the second clock offset and the first clock offset is collectively referred to as a calculated clock offset in the following. For example, refer to FIG. 8. When there is no clock synchronization error, the third clock offset is 12:00-12:04=-4 minutes, the second clock offset is 12:00-11:58=2 minutes, and the first clock offset is 11:58-12:04=-6 minutes. Therefore, it may be obtained that 2 minutes+(-6) minutes=-4 minutes, that is, a calculated clock offset is equal to the third clock offset. When the first host has M neighboring hosts, M calculated clock offsets can be obtained by using the foregoing relationship. The M calculated clock offsets are equal and equal to the third clock offset.

However, asymmetry of OWDs in a round trip between two hosts causes an error in clock synchronization.

Therefore, when the first host has M neighboring hosts, M calculated clock offsets are not necessarily equal, and are not necessarily equal to the third clock offset. To further reduce a clock synchronization error and improve precision of clock synchronization, the fourth clock offset may be determined based on the M first clock offsets, the M second clock offsets, and the third clock offset according to the following formula (1):

$$\tau_a = \frac{(\tau_0 + offset_{10}) + \sum_{j=1}^{M}(\tau_j + offset_{1j})}{M+1} \qquad (1)$$

In the foregoing formula (1), $\tau_a$ represents the fourth clock offset. $\tau_0$ represents a clock offset of the reference host relative to itself, and the clock offset is 0. That is, the reference host does not have a clock offset with itself. $offset_{10}$ represents the third clock offset. $\tau_j$ represents a $j^{th}$ second clock offset of the M second clock offsets, that is, a clock offset of the reference host relative to a $j^{th}$ neighboring host of the M neighboring hosts. $offset_{1j}$ represents a $j^{th}$ first clock offset of the M first clock offsets, that is, a clock offset of the $j^{th}$ neighboring host of the M neighboring hosts relative to the first host.

In other words, an average value of the M calculated clock offsets and the third clock offset may be determined as the fourth clock offset, and the clock of the first host is corrected based on the fourth clock offset in a subsequent step, thereby reducing a clock synchronization error caused by asymmetry of OWDs in a round trip, and implementing high-precision clock synchronization.

In some embodiments, before the fourth clock offset is determined based on the M first clock offsets, the M second clock offsets, and the third clock offset, M pieces of first round-trip time and a piece of third round-trip time may be further obtained. The piece of first round-trip time is a piece of round-trip time between the first host and one of the M neighboring hosts, and the piece of third round-trip time is a piece of round-trip time between the reference host and the first host. In this way, the fourth clock offset is determined based on the M first clock offsets, the M second clock offsets, the third clock offset, the M pieces of first round-trip time, and the piece of third round-trip time.

Similar to the foregoing descriptions, the first host can send a probe packet to the M neighboring hosts and the reference host according to a related method, to determine the M pieces of first round-trip time and the piece of third round-trip time. For example, four timestamps are determined according to an NTP, and then a corresponding piece of round-trip time is determined based on the four timestamps. That is, the M pieces of first round-trip time and the piece of third round-trip time are determined by the first host through probing Certainly, the M pieces of first round-trip time and the piece of third round-trip time may alternatively be obtained by the first host in another manner. This is not limited in this embodiment of this application.

Optionally, an implementation in which the fourth clock offset is determined based on the M first clock offsets, the M second clock offsets, the third clock offset, the M pieces of first round-trip time, and the piece of third round-trip time includes: determining M+1 initial clock offsets based on the M first clock offsets, the M second clock offsets, and the third clock offset; determining, based on the M pieces of first round-trip time and the piece of third round-trip time, weights respectively corresponding to the M pieces of first round-trip time and a weight corresponding to the piece of third round-trip time, to obtain M+1 weights; and determining the fourth clock offset based on the M+1 initial clock offsets and the M+1 weights.

M initial clock offsets can be determined based on the M first clock offsets and the M second clock offsets, and the third clock offset is also used as an initial clock offset, to obtain the M+1 initial clock offsets.

The M first clock offsets correspond to the M neighboring hosts, and the M second clock offsets also correspond to the M neighboring hosts. Therefore, the M first clock offsets correspond to the M second clock offsets one by one. For any first clock offset of the M first clock offsets, the first clock offset and a corresponding second clock offset are added to obtain an initial clock offset. Each of the M first clock offsets and each of the M second clock offsets are processed in a same manner, to obtain the M initial clock offsets.

In some embodiments, reciprocals of the M pieces of first round-trip time may be used as weights respectively corresponding to the M pieces of first round-trip time, and a reciprocal of the piece of third round-trip time may be used as a weight corresponding to the piece of third round-trip time, to obtain the M+1 weights. For example, if the piece of first round-trip time is 50 ms, the weight corresponding to the piece of first round-trip time may be 1/50.

In some other embodiments, multiples of reciprocals of the M pieces of first round-trip time may be used as weights respectively corresponding to the M pieces of first round-trip time, and a multiple of a reciprocal of the piece of third round-trip time may be used as a weight corresponding to the piece of third round-trip time, to obtain the M+1 weights. Certainly, the M+1 weights may alternatively be determined in another manner, so that the weights are inversely proportional to the pieces of round-trip time. This is not limited in this embodiment of this application.

Optionally, an implementation of determining the fourth clock offset based on the M+1 initial clock offsets and the M+1 weights includes: multiplying the M+1 initial clock offsets and values of corresponding weights to obtain M+1 weight clock offsets, and dividing a sum of the M+1 weight clock offsets by a sum of the M+1 weights to obtain the fourth clock offset.

The M initial clock offsets of the M+1 initial clock offsets correspond to the M neighboring hosts, one remaining initial clock offset corresponds to the reference host, M weights of the M+1 weights correspond to the M neighboring hosts, and one remaining weight corresponds to the reference host. Therefore, based on this, the M+1 initial clock offsets are in one-to-one correspondence with the M+1 weights.

For ease of understanding, the foregoing process of determining the fourth clock offset based on the M+1 initial clock offsets and the M+1 weights may be represented by using the following formula (2):

$$\tau_a = \frac{\sum_{d=1}^{M+1}(X_d A_d)}{\sum_{d=1}^{M+1} A_d} \qquad (2)$$

In the foregoing formula (2), $\tau_a$ represents the fourth clock offset, $X_d$ represents a $d^{th}$ initial clock offset in the M+1 initial clock offsets, and $A_d$ represents a weight corresponding to the $d^{th}$ initial clock offset in the M+1 initial clock offsets.

Based on the foregoing descriptions, asymmetry of OWDs in a round trip between two hosts causes an error in clock synchronization, and a longer piece of round-trip time indicates a longer transmission path between the two hosts. In addition, a greater probability that the OWDs in the round trip between the two hosts are asymmetric indicates a greater difference between the OWDs in the round trip, leading to a larger clock synchronization error. In this case, a confidence of the calculated initial clock offset is lower. Therefore, the M+1 initial clock offsets may be multiplied by corresponding weights, so that an initial clock offset with a low confidence corresponds to a low weight, thereby ensuring that the finally determined fourth clock offset is more precise and effectively reducing a clock synchronization error.

**Step 703:** Correct a clock of a first host based on the fourth clock offset, to implement clock synchronization between the first host and a reference host.

In some embodiments, the first host may correct the clock of the first host to a sum of a current moment of the first host and the fourth clock offset, thereby implementing clock synchronization between the first host and the reference host. Certainly, the first host may also store the fourth clock offset, to implement clock synchronization between the first host and the reference host. In other words, the first host may adjust its own clock to a clock of the reference host, so that the clock of the first host is synchronized with the clock of the reference host. Alternatively, the first host may store the fourth clock offset, and does not adjust its own clock. During subsequent communication, a timestamp is set to a sum of a current moment of the first host and the fourth clock offset.

In the foregoing steps 701 to 703, the M first clock offsets, the M second clock offsets, and the third clock offset are all obtained by the first host and the M neighboring hosts through probing. The first host may calculate the fourth clock offset based on the M first clock offsets, the M second clock offsets, and the third clock offset, and then directly correct the clock of the first host based on the fourth clock offset. In other words, the first host determines the fourth clock offset based on the M first clock offsets, the M second clock offsets, and the third clock offset that are obtained through probing, and directly corrects the clock of the first host. Certainly, the first host may alternatively obtain the fourth clock offset through iteration in a plurality of time slices, thereby ensuring that an error of the finally obtained fourth clock offset is minimized and implementing higher-precision clock synchronization.

When the first host obtains the fourth clock offset through iteration in a plurality of time slices, the M first clock offsets, the M second clock offsets, and the third clock offset in a 1st time slice are all obtained by the first host and the M neighboring hosts through probing. From a 2nd time slice, the M first clock offsets and the third clock offset are still obtained by the first host through probing, the M second clock offsets are obtained by performing iteration on clock offsets of the reference host relative to the M neighboring hosts in a previous time slice. The fourth clock offset is a clock offset that is of the reference host relative to the first host and that is obtained by performing iteration in a current time slice. In this case, if the fourth clock offset meets a convergence condition, the clock of the first host is corrected based on the fourth clock offset. If the fourth clock offset does not meet the convergence condition, a quantity of iterations is increased by 1, and the fourth clock offset is sent to the M neighboring hosts, so that the M neighboring hosts perform iteration on the clock offsets of the reference host relative to the M neighboring hosts, and return to step 701 in a next time slice.

Optionally, for any neighboring host of the M neighboring hosts, the neighboring host can alternatively determine a clock offset of the reference host relative to the neighboring host with reference to the foregoing manner of determining the fourth clock offset by the first host, to obtain a second clock offset, and send the second clock offset to the first host.

In some embodiments, the convergence condition includes: a quantity of iterations of the fourth clock offset is greater than an iteration quantity threshold. In some other embodiments, the convergence condition includes: a difference between the fourth clock offset and a fifth clock offset is less than an offset threshold; and the fifth clock offset is a clock offset that is of the reference host relative to the first host and that is obtained by performing iteration in a previous time slice.

Certainly, the convergence condition may further include another condition. This is not limited in this embodiment of this application.

The iteration quantity threshold is set in advance. For example, the iteration quantity threshold may be set to 20. In addition, in different cases, adjustment may be further performed according to different requirements. The offset threshold is set in advance. In addition, in different cases, adjustment may be further performed according to different requirements.

If the fourth clock offset meets the convergence condition, it indicates that precision of the fourth clock offset is high. Therefore, the clock of the first host may be corrected based on the fourth clock offset. If the fourth clock offset does not meet the convergence condition, it indicates that the precision of the fourth clock offset is low, and iteration optimization may be performed again. Therefore, a quantity of iterations may be increased by 1, and the fourth clock offset is sent to the M neighboring hosts, so that the M neighboring hosts perform iteration on the clock offsets of the reference host relative to the M neighboring hosts, and return to step 701 in a next time slice.

During actual application, the first host may be a device such as a switch. When the first host is a switch, the first host may include one main control board and one interface board, the main control board is connected to the interface board, and the fourth clock offset is a clock offset of the reference host relative to the main control board. In this case, after the clock of the first host is corrected based on the fourth clock offset, a clock of the interface board may be further corrected based on the clock offset of the reference host relative to the main control board.

Based on the clock offset of the reference host relative to the main control board, the clock of the interface board is corrected in a plurality of manners. The following describes two of the manners.

In a first implementation, the main control board determines a corrected clock of the interface board based on the clock offset of the reference host relative to the main control board, and the main control board sends the corrected clock of the interface board to the interface board. The interface board receives the corrected clock sent by the main control board, and corrects its own clock based on the received corrected clock, to complete clock synchronization with the main control board.

Optionally, the main control board may determine a sum of a current moment of the main control board and the clock offset of the reference host relative to the main control board as the corrected clock of the interface board.

Optionally, the interface board adjusts its own clock to the corrected clock sent by the main control board, to complete clock synchronization with the main control board. Certainly, the interface board may further store a difference between a current moment of the interface board and the corrected clock, to complete clock synchronization with the main control board. This is not limited in this embodiment of this application.

In a second implementation, the main control board determines a clock offset of the main control board relative to the interface board based on the clock offset of the reference host relative to the main control board and the clock of the interface board, and the main control board sends, to the interface board, the clock offset of the main control board relative to the interface board. The interface board receives the clock offset sent by the main control board, and corrects its own clock based on the received clock offset, to complete clock synchronization with the main control board.

Optionally, the main control board may subtract the current moment of the interface board from a value of the sum of the current moment of the main control board and the clock offset of the reference host relative to the main control board, to obtain the clock offset of the main control board relative to the interface board.

Optionally, the interface board corrects its own clock to a sum of the current moment of the interface board and the clock offset of the main control board relative to the interface board, to complete clock synchronization with the main control board. Certainly, the interface board may further store the clock offset of the main control board relative to the interface board, to complete clock synchronization with the main control board. This is not limited in this embodiment of this application.

In some other embodiments, the first host may further include one main control board and X secondary control boards, the main control board is connected to the X secondary control boards, the fourth clock offset is a clock offset of the reference host relative to the main control board, and X is an integer greater than or equal to 1. In this case, after the clock of the first host is corrected based on the fourth clock offset, clocks of the X secondary control boards may be further corrected based on the clock offset of the reference host relative to the main control board, to implement clock synchronization between the X secondary control boards and the main control board.

The main control board and the X secondary control boards may have completed clock synchronization according to the method provided in this embodiment of this application, or may not perform clock synchronization. In different cases, based on the clock offset of the reference host relative to the main control board, manners of correcting the clocks of the X secondary control boards are different. The manners are separately described below.

When the main control board and the X secondary control boards have completed clock synchronization according to the method provided in this embodiment of this application, clock offsets of the main control board relative to the X secondary control boards may be respectively determined. The clocks of the X secondary control boards are corrected based on the clock offsets of the main control board relative to the X secondary control boards, to implement clock synchronization between the X secondary control boards and the main control board.

Optionally, for any secondary control board of the X secondary control boards, the main control board may directly determine the clock offset of the reference host relative to the main control board as a clock offset of the main control board relative to the secondary control board. The main control board sends, to the secondary control board, the clock offset of the main control board relative to the secondary control board. The secondary control board receives the clock offset sent by the main control board, and corrects its own clock based on the received clock offset, to complete clock synchronization with the main control board. Each of the X secondary control boards is processed in the foregoing manner, to finally implement clock synchronization between the X secondary control boards and the main control board.

When the main control board and the X secondary control boards have not performed clock synchronization, a first secondary control board obtains X-1 sixth clock offsets, X-1 seventh clock offsets, and an eighth clock offset. The sixth clock offset is a clock offset of one of X-1 neighboring secondary control boards relative to the first secondary control board. The seventh clock offset is a clock offset of the main control board relative to one of the X-1 neighboring secondary control boards. The eighth clock offset is a clock offset of the main control board relative to the first secondary control board. A ninth clock offset is determined based on the X-1 sixth clock offsets, the X-1 seventh clock offsets, and the eighth clock offset. A clock of the first secondary control board is corrected based on the ninth clock offset, to implement clock synchronization between the first secondary control board and the main control board. The first secondary control board is one of the X secondary control boards, and the first secondary control board has X-1 neighboring secondary control boards. The neighboring secondary control board is a secondary control board other than the first secondary control board in the X secondary control boards. Each of the X secondary control boards is processed in the foregoing manner, to finally implement clock synchronization between the X secondary control boards and the main control board.

A manner in which the first secondary control board performs clock synchronization with the main control board is similar to the foregoing manner in which the first host performs clock synchronization with the reference host. For a detailed implementation process, refer to the foregoing corresponding content. Details are not described herein again.

Optionally, when the first host includes the main control board and the X secondary control boards, the first host may further include Y interface boards. Each of the X secondary control boards is connected to at least one of the Y interface boards, and Y is an integer greater than or equal to 1. After the clocks of the X secondary control boards are corrected based on the clock offsets of the main control board relative to the X secondary control boards, clocks of the Y interface boards may be further corrected based on the clock offsets of the main control board relative to the X secondary control boards.

For any secondary control board of the X secondary control boards, a clock offset of at least one interface board connected to the secondary control board relative to the secondary control board and a clock offset of the main control board relative to the secondary control board are determined. A clock of the at least one interface board connected to the secondary control board is corrected based on the clock offset of the main control board relative to the secondary control board. Each of the X secondary control boards is processed in the foregoing manner, to finally complete clock correction of the Y interface boards.

Optionally, for any interface board of the at least one interface board, a clock of the interface board is corrected based on a clock offset of the main control board relative to a secondary control board connected to the interface board. Each of the at least one interface board is processed in the foregoing manner, to finally complete clock correction of the at least one interface board.

A manner in which the clock of the interface board is corrected based on the clock offset of the main control board relative to the secondary control board connected to the interface board is consistent with the foregoing manner in which the clock of the interface board is corrected based on the clock offset of the reference host relative to the main control board. For a detailed implementation process, refer to the foregoing corresponding content. Details are not described herein again.

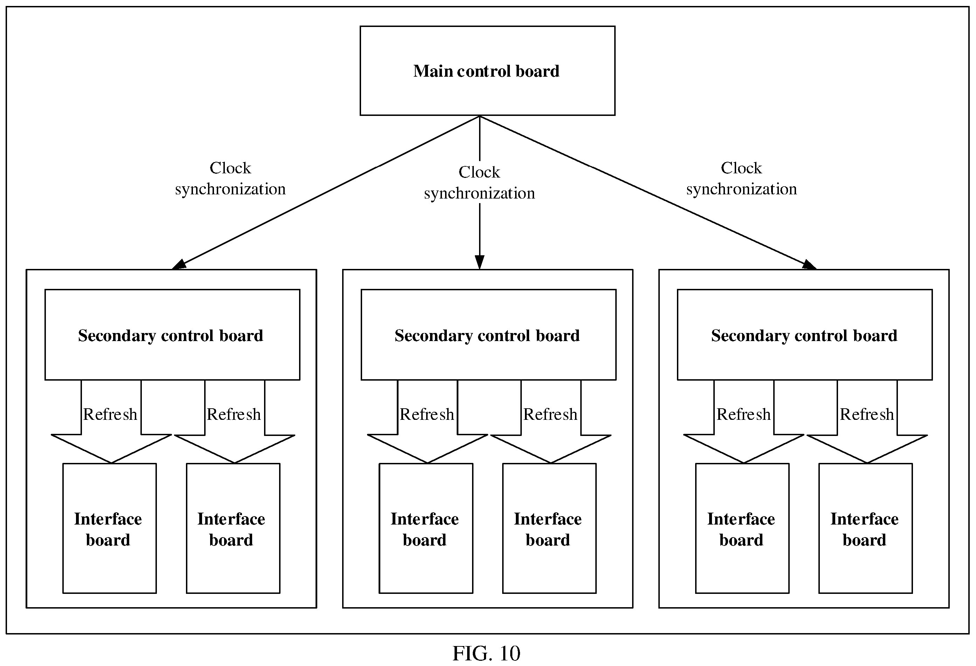

In other words, with reference to FIG. 9, when the first host includes the main control board and the interface boards, the fourth clock offset is a clock offset of the reference host relative to the main control board, and the first host may refresh a clock of the main control board to those of the interface boards based on the clock offset of the reference host relative to the main control board, to ensure implementation of high-precision clock synchronization between clocks of the interface boards and a clock of the reference host. Refer to FIG. 10. When the first host includes the main control board, the secondary control boards, and the interface boards, the fourth clock offset is also a clock offset of the reference host relative to the main control board. In this case, clock synchronization may be performed between the main control board and the secondary control boards based on the clock offset of the reference host relative to the main control board, to refresh clocks of the secondary control boards to those of the interface boards, to ensure implementation of high-precision clock synchronization between clocks of the interface boards and a clock of the reference host. In this way, in a subsequent process of calculating a one-way delay by sending a probe packet, a timestamp may be generated based on a time at which the probe packet is sent from the interface board, to avoid a case in which a measured one-way delay is greater than an actual one-way delay because the probe packet queues in a network adapter, thereby effectively ensuring accurate measurement of the one-way delay.

It should be noted that the main control board and the interface boards may refresh the clock of the main control board to those of the interface boards by invoking a local application programming interface (application programming interface, API), and the secondary control boards and the interface boards may also refresh the clocks of the secondary control boards to those of the interface boards by invoking the API. Certainly, such a refresh may alternatively be performed in another manner. This is not limited in this embodiment of this application.

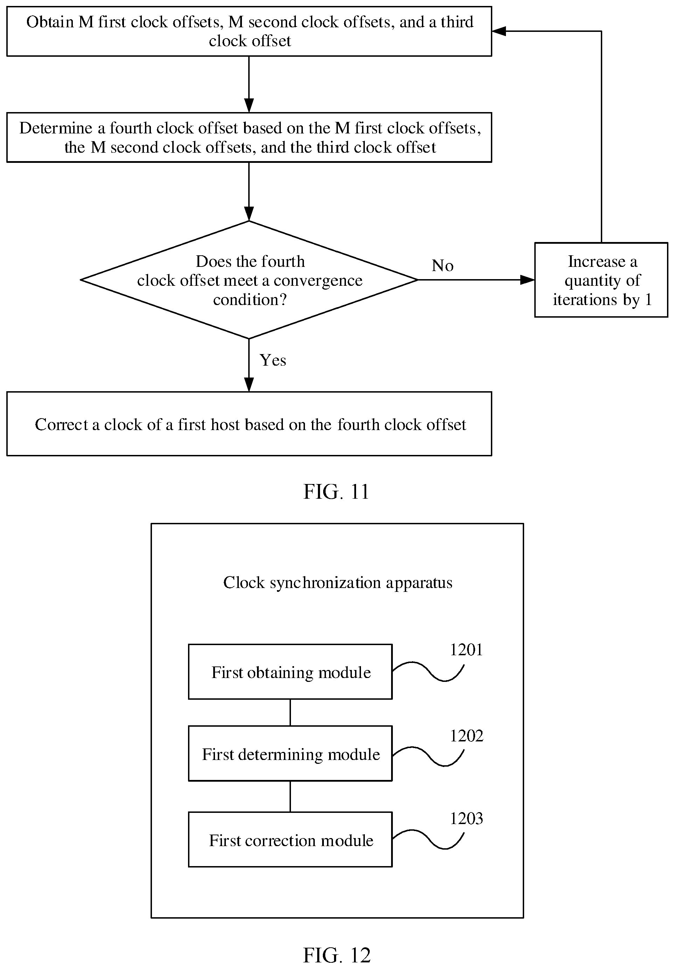

The following uses FIG. 11 as an example to describe a clock synchronization method provided in an embodiment of this application.

As shown in FIG. 11, a first host can obtain M first clock offsets, M second clock offsets, and a third clock offset, and then determine a fourth clock offset based on the M first clock offsets, the M second clock offsets, and the third clock offset. If the fourth clock offset does not meet a convergence condition, a quantity of iterations is increased by 1, and return to the step of obtaining the M first clock offsets, the M second clock offsets, and the third clock offset. If the fourth clock offset meets the convergence condition, the clock of the first host is corrected based on the fourth clock offset.

In an ideal situation, a clock offset of a reference host relative to the first host is equal to a sum of a clock offset of the reference host relative to a neighboring host and a clock offset of the neighboring host relative to the first host. Therefore, the fourth clock offset can be precisely determined based on clock offsets of neighboring hosts relative to the first host, clock offsets of the reference host relative to the neighboring hosts, and the clock offset of the reference host relative to the first host, and the clock of the first host is corrected based on the fourth clock offset. In this way, precision of clock synchronization between the first host and the reference host can be further improved, thereby reducing a clock synchronization error.

In addition, asymmetry of OWDs in a round trip between two hosts causes an error in clock synchronization, and a longer piece of round-trip time indicates a longer transmission path between the two hosts. In addition, a greater probability that the OWDs in the round trip between the two hosts are asymmetric indicates a greater difference between the OWDs in the round trip, leading to a larger clock synchronization error. In this case, a confidence of a calculated initial clock offset is lower. Therefore, in this embodiment of this application, an initial clock offset is multiplied by a weight corresponding to the initial clock offset, so that an initial clock offset with a low confidence corresponds to a low weight, thereby ensuring that the finally determined fourth clock offset is more precise and effectively reducing a clock synchronization error. In addition, in this embodiment of this application, the fourth clock offset may alternatively be determined in an iterative manner. The clock of the first host is corrected only when the fourth clock offset meets the convergence condition, that is, when it is ensured that precision of the fourth clock offset is high, thereby further improving precision of clock synchronization and reducing a clock synchronization error. When the first host includes a main control board and interface boards, or includes the main control board, secondary control boards, and the interface boards, a clock of the main control board or clocks of the secondary control boards may alternatively be refreshed to those of the interface boards, to ensure implementation of high-precision clock synchronization between clocks of the interface boards and a clock of the reference host. In this way, in a subsequent process of calculating a one-way delay by sending a probe packet, a timestamp may be generated based on a time at which the probe packet is sent from the interface board, to avoid a case in which a measured one-way delay is greater than an actual one-way delay because the probe packet queues in a network adapter, thereby effectively ensuring accurate measurement of the one-way delay.

Finally, in the clock synchronization method provided in this embodiment of this application, a cluster control device does not need to be added to perform clock synchronization in a centralized manner on hosts (that is, to-be-synchronized hosts) that require clock synchronization, and only the to-be-synchronized hosts need to locally calculate the fourth clock offset, to complete high-precision clock synchronization. In other words, in this embodiment of this application, the to-be-synchronized hosts separately perform calculation locally, to implement distributed calculation, without relying on a device to perform centralized calculation. In this way, no additional cluster control device needs to be deployed to perform clock synchronization, thereby reducing dependence on the cluster control device while implementing high-precision clock synchronization.

FIG. 12 is a diagram of a structure of a clock synchronization apparatus according to an embodiment of this application. The clock synchronization apparatus may be implemented as a part or all of a host by using software, hardware, or a combination thereof. Refer to FIG. 12. The apparatus includes: a first obtaining module 1201, a first determining module 1202, and a first correction module 1203.

The first obtaining module 1201 is configured to obtain M first clock offsets, M second clock offsets, and a third clock offset. The first clock offset is a clock offset of one of the M neighboring hosts relative to the first host, the second clock offset is a clock offset of a reference host relative to one of the M neighboring hosts, and the third clock offset is a clock offset of the reference host relative to the first host. For a detailed implementation process, refer to corresponding content in the foregoing embodiments. Details are not described herein again.

The first determining module 1202 is configured to determine a fourth clock offset based on the M first clock offsets, the M second clock offsets, and the third clock offset. For a detailed implementation process, refer to corresponding content in the foregoing embodiments. Details are not described herein again.

The first correction module 1203 is configured to correct a clock of the first host based on the fourth clock offset, to implement clock synchronization between the first host and the reference host. For a detailed implementation process, refer to corresponding content in the foregoing embodiments. Details are not described herein again.

Optionally, the apparatus further includes:
a second obtaining module, configured to obtain M pieces of first round-trip time and a piece of third round-trip time. The piece of first round-trip time is a piece of round-trip time between the first host and one of the M neighboring hosts, and the piece of third round-trip time is a piece of round-trip time between the first host and the reference host.

The first determining module 1202 is specifically configured to:
determine the fourth clock offset based on the M first clock offsets, the M second clock offsets, the third clock offset, the M pieces of first round-trip time, and the piece of third round-trip time.

Optionally, the first determining module 1202 is specifically configured to:

determine M+1 initial clock offsets based on the M first clock offsets, the M second clock offsets, and the third clock offset;
determine, based on the M pieces of first round-trip time and the piece of third round-trip time, weights respectively corresponding to the M pieces of first round-trip time and a weight corresponding to the piece of third round-trip time, to obtain M+1 weights; and
determine the fourth clock offset based on the M+1 initial clock offsets and the M+1 weights.

Optionally, the M second clock offsets are obtained by performing iteration on clock offsets of the reference host relative to the M neighboring hosts in a previous time slice, and the fourth clock offset is a clock offset that is of the reference host relative to the first host and that is obtained by performing iteration in a current time slice.

The first correction module 1203 is specifically configured to:
correct the clock of the first host based on the fourth clock offset if the fourth clock offset meets a convergence condition.

Optionally, the convergence condition includes: a quantity of iterations of the fourth clock offset is greater than an iteration quantity threshold.

Optionally, the convergence condition includes: a difference between the fourth clock offset and a fifth clock offset is less than an offset threshold; and the fifth clock offset is a clock offset that is of the reference host relative to the first host and that is obtained by performing iteration in a previous time slice.

Optionally, the first host includes one main control board and one interface board, the main control board is connected to the interface board, and the fourth clock offset is a clock offset of the reference host relative to the main control board.

The apparatus further includes:
a second correction module, configured to correct a clock of the interface board based on the clock offset of the reference host relative to the main control board.

Optionally, the first host includes one main control board and X secondary control boards, the main control board is connected to the X secondary control boards, the fourth clock offset is a clock offset of the reference host relative to the main control board, and X is an integer greater than or equal to 1.

The apparatus further includes:

a second determining module, configured to respectively determine clock offsets of the main control board relative to the X secondary control boards; and
a third correction module, configured to correct clocks of the X secondary control boards based on the clock offsets of the main control board relative to the X secondary control boards, to implement clock synchronization between the X secondary control boards and the main control board.

Optionally, the first host further includes Y interface boards, each of the X secondary control boards is connected to at least one of the Y interface boards, and Y is an integer greater than or equal to 1.

The apparatus further includes:
a fourth correction module, configured to correct clocks of the Y interface boards based on the clock offsets of the main control board relative to the X secondary control boards.

In an ideal situation, the clock offset of the reference host relative to the first host is equal to a sum of a clock offset of the reference host relative to the neighboring host and the clock offset of the neighboring host relative to the first host. Therefore, the fourth clock offset can be precisely determined based on clock offsets of the neighboring hosts relative to the first host, clock offsets of the reference host relative to the neighboring hosts, and the clock offset of the reference host relative to the first host, and the clock of the first host is corrected based on the fourth clock offset. In this way, precision of clock synchronization between the first host and the reference host can be further improved, thereby reducing a clock synchronization error.

In addition, asymmetry of OWDs in a round trip between two hosts causes an error in clock synchronization, and a longer piece of round-trip time indicates a longer transmission path between the two hosts. In addition, a greater probability that the OWDs in the round trip between the two hosts are asymmetric indicates a greater difference between the OWDs in the round trip, leading to a larger clock synchronization error. In this case, a confidence of a calculated initial clock offset is lower. Therefore, in this embodiment of this application, an initial clock offset is multiplied by a weight corresponding to the initial clock offset, so that an initial clock offset with a low confidence corresponds to a low weight, thereby ensuring that the finally determined fourth clock offset is more precise and effectively reducing a clock synchronization error. In addition, in this embodiment of this application, the fourth clock offset may alternatively be determined in an iterative manner. The clock of the first host is corrected only when the fourth clock offset meets the convergence condition, that is, when it is ensured that precision of the fourth clock offset is high, thereby further improving precision of clock synchronization and reducing a clock synchronization error. When the first host includes a main control board and interface boards, or includes the main control board, secondary control boards, and the interface boards, a clock of the main control board or clocks of the secondary control boards may alternatively be refreshed to those of the interface boards, to ensure implementation of high-precision clock synchronization between clocks of the interface boards and a clock of the reference host. In this way, in a subsequent process of calculating a one-way delay by sending a probe packet, a timestamp may be generated based on a time at which the probe packet is sent from the interface board, to avoid a case in which a measured one-way delay is greater than an actual one-way delay because the probe packet queues in a network adapter, thereby effectively ensuring accurate measurement of the one-way delay.

Finally, in the clock synchronization method provided in this embodiment of this application, a cluster control device does not need to be added to perform clock synchronization in a centralized manner on hosts (that is, to-be-synchronized hosts) that require clock synchronization, and only the to-be-synchronized hosts need to locally calculate the fourth clock offset, to complete high-precision clock synchronization. In other words, in this embodiment of this application, the to-be-synchronized hosts separately perform calculation locally, to implement distributed calculation, without relying on a device to perform centralized calculation. In this way, no additional cluster control device needs to be deployed to perform clock synchronization, thereby reducing dependence on the cluster control device while implementing high-precision clock synchronization.

It should be noted that when the clock synchronization apparatus provided in the foregoing embodiment performs clock synchronization, division of the foregoing functional modules is merely used as an example for description. During actual application, the foregoing functions may be allocated to different functional modules for implementation as required. To be specific, an internal structure of the apparatus is divided into different functional modules to implement all or some of the functions described above. In addition, the clock synchronization apparatus provided in the foregoing embodiment and the clock synchronization method embodiment pertain to a same concept. For a specific implementation process of the clock synchronization apparatus, refer to the method embodiment. Details are not described herein again.

All or some of the foregoing embodiments may be implemented by software, hardware, firmware, or any combination thereof. When software is used to implement embodiments, the foregoing embodiments may be implemented completely or partially in a form of a computer program product. The computer program product includes one or more computer instructions. When the computer instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a data subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid state disk, SSD)), or the like. It should be noted that the computer-readable storage medium mentioned in embodiments of this application may be a non-volatile storage medium, that is, may be a non-transitory storage medium.

It should be understood that "a plurality of" in this specification means two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, user personal information, and the like), data (including but not limited to data used for analysis, stored data, displayed data, and the like), and signals in embodiments of this application are all authorized by a user or fully authorized by all parties, and collection, use, and processing of related data need to conform to related laws, regulations, and standards of related countries and regions. For example, the M first clock offsets, the M second clock offsets, and the third clock offset in embodiments of this application are all obtained under full authorization.

The foregoing descriptions are merely embodiments of this application, but are not intended to limit this application. Any modification, equivalent replacement, or improvement made without departing from the spirit and principle of this application should fall within the protection scope of this application.

**Claims**

1. A clock synchronization method, applied to a first host, wherein the first host has M neighboring hosts, and M is an integer greater than or equal to 1; and the method comprises:

   obtaining M first clock offsets, M second clock offsets, and a third clock offset, wherein the first clock offset is a clock offset of one of the M neighboring hosts relative to the first host, the second clock offset is a clock offset of a reference host relative to one of the M neighboring hosts, and the third clock offset is a clock offset of the reference host relative to the first host;
   determining a fourth clock offset based on the M first clock offsets, the M second clock offsets, and the third clock offset; and
   correcting a clock of the first host based on the fourth clock offset, to implement clock synchronization between the first host and the reference host.

2. The method according to claim 1, wherein before determining the fourth clock offset based on the M first clock offsets, the M second clock offsets, and the third clock offset, the method further comprises:

   obtaining M pieces of first round-trip time and a piece of third round-trip time, wherein the piece of first round-trip time is a piece of round-trip time between the first host and one of the M neighboring hosts, and the piece of third round-trip time is a piece of round-trip time between the first host and the reference host, wherein
   determining the fourth clock offset based on the M first clock offsets, the M second clock offsets, and the third clock offset comprises:
   determining the fourth clock offset based on the M first clock offsets, the M second clock offsets, the third clock offset, the M pieces of first round-trip time, and the piece of third round-trip time.

3. The method according to claim 2, wherein determining the fourth clock offset based on the M first clock offsets, the M second clock offsets, the third clock offset, the M pieces of first round-trip time, and the piece of third round-trip time comprises:

   determining M+1 initial clock offsets based on the M first clock offsets, the M second clock offsets, and the third clock offset;
   determining, based on the M pieces of first round-trip time and the piece of third round-trip time, weights respectively corresponding to the M pieces of first round-trip time and a weight corresponding to the piece of third round-trip time, to obtain M+1 weights; and
   determining the fourth clock offset based on the M+1 initial clock offsets and the M+1 weights.

4. The method according to any one of claims 1 to 3, wherein the M second clock offsets are obtained by performing iteration on clock offsets of the reference host relative to the M neighboring hosts in a previous time slice, and the fourth clock offset is a clock offset that is of the reference host relative to the first host and that is obtained by performing iteration in a current time slice; and
   correcting the clock of the first host based on the fourth clock offset comprises:
   correcting the clock of the first host based on the fourth clock offset if the fourth clock offset meets a convergence condition.

5. The method according to claim 4, wherein the convergence condition comprises: a quantity of iterations of the fourth clock offset is greater than an iteration quantity threshold.

6. The method according to claim 4, wherein the convergence condition comprises: a difference between the fourth clock offset and a fifth clock offset is less than an offset threshold; and the fifth clock offset is a clock offset that is of the reference host relative to the first host and that is obtained by performing iteration in a previous time slice.

7. The method according to claim 1, wherein the first host comprises one main control board and one interface board, the main control board is connected to the interface board, and the fourth clock offset is a clock offset of the reference host relative to the main control board; and
after correcting the clock of the first host based on the fourth clock offset, the method further comprises:
correcting a clock of the interface board based on the clock offset of the reference host relative to the main control board.

8. The method according to claim 1, wherein the first host comprises one main control board and X secondary control boards, the main control board is connected to the X secondary control boards, the fourth clock offset is a clock offset of the reference host relative to the main control board, and X is an integer greater than or equal to 1; and
after correcting the clock of the first host based on the fourth clock offset, the method further comprises:

respectively determining clock offsets of the main control board relative to the X secondary control boards; and
correcting clocks of the X secondary control boards based on the clock offsets of the main control board relative to the X secondary control boards, to implement clock synchronization between the X secondary control boards and the main control board.

9. The method according to claim 8, wherein the first host further comprises Y interface boards, each of the X secondary control boards is connected to at least one of the Y interface boards, and Y is an integer greater than or equal to 1; and
after correcting the clocks of the X secondary control boards based on the clock offsets of the main control board relative to the X secondary control boards, the method further comprises:
correcting clocks of the Y interface boards based on the clock offsets of the main control board relative to the X secondary control boards.

10. A clock synchronization apparatus, used in a first host, wherein the first host has M neighboring hosts, and M is an integer greater than or equal to 1; and the apparatus comprises:

a first obtaining module, configured to obtain M first clock offsets, M second clock offsets, and a third clock offset, wherein the first clock offset is a clock offset of one of the M neighboring hosts relative to the first host, the second clock offset is a clock offset of a reference host relative to one of the M neighboring hosts, and the third clock offset is a clock offset of the reference host relative to the first host;
a first determining module, configured to determine a fourth clock offset based on the M first clock offsets, the M second clock offsets, and the third clock offset; and
a first correction module, configured to correct a clock of the first host based on the fourth clock offset, to implement clock synchronization between the first host and the reference host.

11. The apparatus according to claim 10, wherein the apparatus further comprises:

a second obtaining module, configured to obtain M pieces of first round-trip time and a piece of third round-trip time, wherein the piece of first round-trip time is a piece of round-trip time between the first host and one of the M neighboring hosts, and the piece of third round-trip time is a piece of round-trip time between the first host and the reference host, wherein
the first determining module is specifically configured to:
determine the fourth clock offset based on the M first clock offsets, the M second clock offsets, the third clock offset, the M pieces of first round-trip time, and the piece of third round-trip time.

12. The apparatus according to claim 11, wherein the first determining module is specifically configured to:

determine M+1 initial clock offsets based on the M first clock offsets, the M second clock offsets, and the third clock offset;
determine, based on the M pieces of first round-trip time and the piece of third round-trip time, weights respectively corresponding to the M pieces of first round-trip time and a weight corresponding to the piece of third round-trip time, to obtain M+1 weights; and
determine the fourth clock offset based on the M+1 initial clock offsets and the M+1 weights.

13. The apparatus according to any one of claims 10 to 12, wherein the M second clock offsets are obtained by performing iteration on clock offsets of the reference host relative to the M neighboring hosts in a previous time slice, and the fourth clock offset is a clock offset that is of the reference host relative to the first host and that is obtained by performing iteration in a current time slice; and
the first correction module is specifically configured to:
correct the clock of the first host based on the fourth clock offset if the fourth clock offset meets a convergence condition.

14. The apparatus according to claim 13, wherein the convergence condition comprises: a quantity of iterations of the fourth clock offset is greater than an iteration quantity threshold.

15. The apparatus according to claim 13, wherein the convergence condition comprises: a difference between the fourth clock offset and a fifth clock offset is less than an offset threshold; and the fifth clock offset is a clock offset that is of the reference host relative to the first host and that is obtained by performing iteration in a previous time slice.

16. The apparatus according to claim 10, wherein the first host comprises one main control board and one interface board, the main control board is connected to the interface board, and the fourth clock offset is a clock offset of the reference host relative to the main control board; and
the apparatus further comprises:
a second correction module, configured to correct a clock of the interface board based on the clock offset of the reference host relative to the main control board.

17. The apparatus according to claim 10, wherein the first host comprises one main control board and X secondary control boards, the main control board is connected to the X secondary control boards, the fourth clock offset is a clock offset of the reference host relative to the main control board, and X is an integer greater than or equal to 1; and
the apparatus further comprises:

a second determining module, configured to respectively determine clock offsets of the main control board relative to the X secondary control boards; and
a third correction module, configured to correct clocks of the X secondary control boards based on the clock offsets of the main control board relative to the X secondary control boards, to implement clock synchronization between the X secondary control boards and the main control board.

18. The apparatus according to claim 17, wherein the first host further comprises Y interface boards, each of the X secondary control boards is connected to at least one of the Y interface boards, and Y is an integer greater than or equal to 1; and
the apparatus further comprises:
a fourth correction module, configured to correct clocks of the Y interface boards based on the clock offsets of the main control board relative to the X secondary control boards.

19. A host, wherein the host comprises a memory and a processor, the memory is configured to store a computer program, and the processor is configured to execute the computer program stored in the memory, to implement steps of the method according to any one of claims 1 to 9.

20. A computer-readable storage medium, wherein the storage medium stores instructions, and when the instructions are run on the computer, the computer is enabled to perform steps of the method according to any one of claims 1 to 9.

21. A computer program, wherein the computer program comprises instructions, and when the instructions are run on the computer, the computer is enabled to perform steps of the method according to any one of claims 1 to 9.

First probe packet

First host

T1 ———————————————▶ T2

Second host

Second probe packet

T4 ◀——————————————— T3

FIG. 1

First host

Second host

FIG. 2

——————— Light with a wavelength a

— — — — — Light with a wavelength b

First host

Second host

FIG. 3

**Clock synchronization is performed according to a clock synchronization protocol**

One-way delay=95
milliseconds

First host   T1=0 ——————————————→ T2=100   Second host

One-way delay=95
milliseconds

T4=290 ←—————————————— T3=200

**Actual situation: Clocks of the first host and the second host are completely synchronized**

One-way delay=100
milliseconds

First host   T1=0 ——————————————→ T2=100   Second host

One-way delay=90
milliseconds

T4=290 ←—————————————— T3=200

FIG. 4

503

Communication
connection

Communication
connection

501

502

Communication
connection

FIG. 5

601  605

Processor | Processor
CPU 0 | CPU 0
CPU 1 | CPU 1

603

Memory  610

Communication 602
bus

Program
code

604

Communication
interface

FIG. 6

| 701 |
| Obtain M first clock offsets, M second clock offsets, and a third clock offset |

↓

| 702 |
| Determine a fourth clock offset based on the M first clock offsets, the M second clock offsets, and the third clock offset |

↓

| 703 |
| Correct a clock of a first host based on the fourth clock offset, to implement clock synchronization between the first host and a reference host |

FIG. 7

T=12:00

Reference host

T=12:04

T=11:58

First host

Neighboring host 1

FIG. 8

**Main control board**

Refresh

**Interface board**

FIG. 9

EP 4 618 451 A1

```
                          ┌─────────────────────┐
                          │  Main control board │
                          └─────────────────────┘
```

Main control board

Clock synchronization    Clock synchronization    Clock synchronization

Secondary control board    Secondary control board    Secondary control board

Refresh    Refresh    Refresh    Refresh    Refresh    Refresh

Interface board    Interface board    Interface board    Interface board    Interface board    Interface board

FIG. 10

Obtain M first clock offsets, M second clock offsets, and a third clock offset

Determine a fourth clock offset based on the M first clock offsets, the M second clock offsets, and the third clock offset

Does the fourth clock offset meet a convergence condition?

No → Increase a quantity of iterations by 1

Yes

Correct a clock of a first host based on the fourth clock offset

FIG. 11

Clock synchronization apparatus

First obtaining module — 1201

First determining module — 1202

First correction module — 1203

FIG. 12

## INTERNATIONAL SEARCH REPORT

| International application No. |
| --- |
| **PCT/CN2023/136964** |

**A. CLASSIFICATION OF SUBJECT MATTER**

H04J 3/06(2006.01)i;  H04W56/00(2009.01)i

According to International Patent Classification (IPC) or to both national classification and IPC

**B. FIELDS SEARCHED**

Minimum documentation searched (classification system followed by classification symbols)

IPC: H04J H04W

Documentation searched other than minimum documentation to the extent that such documents are included in the fields searched

Electronic data base consulted during the international search (name of data base and, where practicable, search terms used)

CNTXT, WPABS, VEN, ENTXT, CNKI: 时钟, 同步, 校正, 修正, 标准, 参考, 其他, 普通, 其余, 其它, 差, 偏移, 时延, 延时, 延迟, 权重, lock, synchronization, correct, standard, reference, other, ordinary, remaining, difference, offset, latency, delay, weight

**C. DOCUMENTS CONSIDERED TO BE RELEVANT**

| Category* | Citation of document, with indication, where appropriate, of the relevant passages | Relevant to claim No. |
| --- | --- | --- |
| A | CN 102118849 A (CHONGQING UNIVERSITY OF POSTS AND TELECOMMUNICATIONS) 06 July 2011 (2011-07-06) description, paragraphs 0014-0045, and figures 1-4 | 1-21 |
| A | CN 111698049 A (SOUTHEAST UNIVERSITY) 22 September 2020 (2020-09-22) entire document | 1-21 |
| A | CN 107222923 A (TSINGHUA UNIVERSITY et al.) 29 September 2017 (2017-09-29) entire document | 1-21 |
| A | CN 113141225 A (CHINA MOBILE GROUP SHANDONG CO., LTD. et al.) 20 July 2021 (2021-07-20) entire document | 1-21 |
| A | US 2013010781 A1 (MITSUBISHI ELECTRIC CORP.) 10 January 2013 (2013-01-10) entire document | 1-21 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 February 2024** | **28 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/136964** |

| Patent document cited in search report | | | Publication date (day/month/year) | Patent family member(s) | | | Publication date (day/month/year) |
| --- | --- | --- | --- | --- | --- | --- | --- |
| CN | 102118849 | A | 06 July 2011 | None | | | |
| CN | 111698049 | A | 22 September 2020 | None | | | |
| CN | 107222923 | A | 29 September 2017 | None | | | |
| CN | 113141225 | A | 20 July 2021 | None | | | |
| US | 2013010781 | A1 | 10 January 2013 | JP | 2013017178 | A | 24 January 2013 |
| | | | | JP | 5992233 | B2 | 14 September 2016 |
| | | | | EP | 2544387 | A1 | 09 January 2013 |
| | | | | EP | 2544387 | B1 | 16 March 2016 |
| | | | | US | 8737379 | B2 | 27 May 2014 |
| | | | | CN | 102869084 | A | 09 January 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211565536